# EUROPEAN PATENT SPECIFICATION

(11) **EP 3 553 623 B1**
(45) Date of publication and mention of the grant of the patent: **17.02.2021**
(21) Application number: 19168032.1
(22) Date of filing: 09.04.2019
(51) Int. Cl.: G05D 7/01, F16K 3/26

(54) **CONTROL VALVE**
REGELVENTIL
SOUPAPE DE COMMANDE

(30) Priority: 09.04.2018 IT 201800004305
(43) Date of publication of application: 16.10.2019
(73) Proprietor: FIMCIM S.P.A., 20121 Milano (MI) (IT)
(72) Inventor: CIMBERIO, Roberto, 28010 AMENO FRAZ. VACCIAGO (NO) (IT); GUIDETTI, Tiziano, 28021 BORGOMANERO (NO) (IT)
(74) Representative: PGA S.p.A.

(56) References cited:
- WO-A2-2014/199302
- US-A- 4 383 552
- US-A- 5 640 997

## Description

### Field of the invention.

The present invention relates to a control valve. In particular, the present invention relates to a valve that allows to pre-set a reference flow rate and is preferably able to automatically provide a constant flow rate regardless of any pressure fluctuations upstream and downstream of the valve. Such valves are for example used in heating systems with even widely diverse dimensions, for example in centralized heating systems for homes or in district heating systems able to provide heat to entire neighborhoods or small cities, and/or in cooling systems.

### State of the art

Known control valves are provided with sensitive membrane elements that, on the basis of a differential pressure signal, automatically regulate a passage port so as to maintain the flow rate substantially constant with changes of the inflow or outflow pressure.

Such a type of valve is for example described in the document WO 2014/199302, in the name of the same Applicant, which discloses a control valve comprising: a valve body, a flow choking device operatively interposed between an inlet and an outlet, a driving spindle having a first actuation end and a second end connected to the flow choking device. The valve further comprises a differential pressure automatic regulation device comprising: a cup-shaped body arranged around the driving spindle and axially mobile with respect to said driving spindle; a spring operatively interposed between the valve body and the cup-shaped body to push the latter away from the flow choking device; a rolling membrane having a radially inner edge fixed to the cup- shaped body and a radially outer edge fixed to the valve body so as to delimit a first chamber in fluid communication with the inlet and a second chamber in fluid communication with the outlet. The flow chocking device has at least one inlet opening facing the inlet of the valve body and at least one outlet opening facing the cup-shaped body. A shutter is mounted around the driving spindle and facing the outlet opening of the flow choking device.

Also known is the document WO 2009/135490 which discloses a control valve provided with a valve body with an inlet and an outlet, with a device for maintaining a constant differential pressure between inlet and outlet and with a control device for setting a maximum flow amount through the valve. The control device comprises two cylindrical shells that cooperate and are positioned in the path of the fluid. The two cylindrical shells can rotate with respect to one another and can move together axially to change an opening.

Also known is the document WO 2017/021789 which discloses a valve that controls the flow through a static regulation and a dynamic regulation. Static regulation is obtained by means of a substantially cylindrical movable control element that can be made to rotate in a seat. The movable control element has a partially closed lower opening associated with a holed fixed element. The rotation of the movable control element allows to open one or more holes and change the fluid passage area. Dynamic regulation is carried out by means of an elastic element that partially covers the aforementioned holes and is deformed, under the effect of pressure, changing the passage area.

### Purpose of the invention

The Applicant has observed that prior art valves provided with automatic or dynamic regulation and with static regulation of the flow rate can be improved technically, both with reference to the devices of the valve that allow to carry out static regulation, or to pre-set a reference flow rate, and to those that carry out dynamic regulation.

In particular, the Applicant observed that the aforementioned devices of prior art valves are structurally complex and that their complexity can negatively influence, for example, the reliability and the cost of the valve.

The Applicant has also observed that such complexity negatively impacts the regularity of the flow that traverses them because necessarily the liquid must transit in excessively tortuous conduits and/or lap structural elements with variable geometry or whose configuration is not constant in all conditions of operation of the valve.

In this context, the Applicant therefore has perceived the need to propose a control valve that:
- has a simpler and more linear structure than those of the prior art;
- is more compact than prior art valves;
- assure better cleanliness and regularity of the flow that traverses it;
- allows precisely to set a reference flow rate;
- allows precisely and effectively to control the flow rate as a function of temperature;
- assures a fine and rapid automatic regulation of the flow rate regardless of pressure fluctuations of the system.

### Summary of the invention

At least one of the purposes indicated above is achieved by a valve according to one or more of the accompanying claims.

Further features and advantages will be more evident from the detailed description of preferred, but not exclusive, embodiments of a control valve according to the present invention.

### Brief description of the drawings

Such description will be provided herein below with reference to the accompanying drawings, provided for indicative purposes only and, therefore, not limiting, wherein:
- figure 1 shows a perspective global view of a control valve according to the present invention;
- figure 2 is a section view of the valve of figure 1;
- figure 3 shows a group of inner elements of the valve of figures 1 and 2;
- figure 4 shows one of the elements of the group of figure 3;
- figure 5 is an enlarged view of figure 2;
- figure 6 shows an additional element of the group of figure 3;
- figure 7 is a different view of the additional element of figure 6;
- figure 8 is another view of the additional element of figure 6;
- figures 9A - 9F show a view from below of the valve of figure 1 in respective operating positions.
- figure 10 shows a section view of a different embodiment of the valve according to the present invention;
- figure 11 shows a group of inner elements of the valve of figure 10;
- figure 12 shows one of the inner elements of the valve of figure 11;
- figure 13 shows an enlarged view of figure 10;
- figure 14 shows a different inner element of the valve of figure 10;
- figure 15 shows another view of the different inner element of figure 14.

### Detailed description of a preferred embodiment of the invention

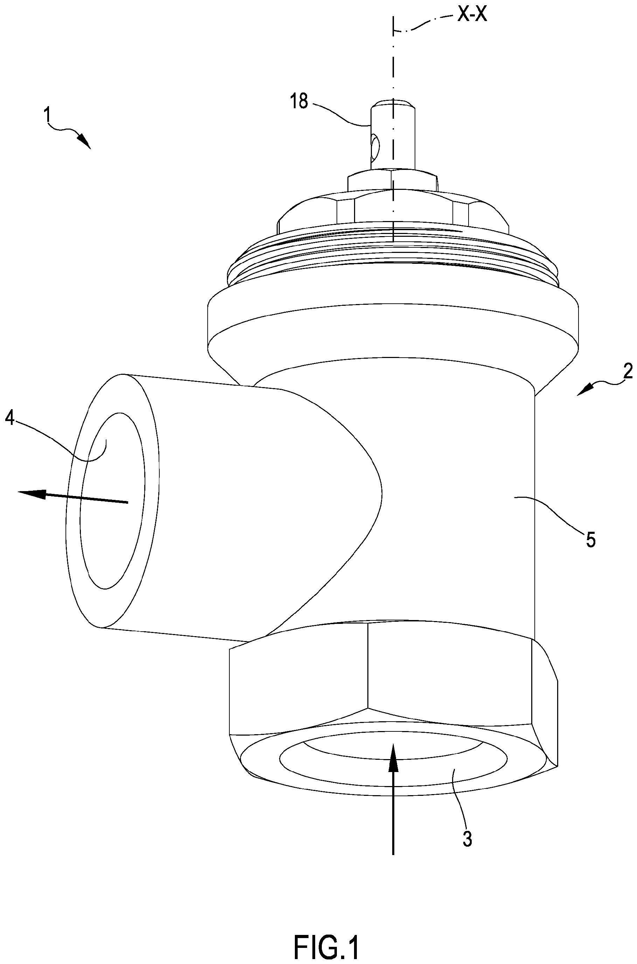

With reference to figure 1, the numeral 1 globally indicates a control valve comprising a valve body 2 which has an inlet 3 and an outlet 4 for the flow of a liquid. Said inlet 3 and outlet 4 are configured to be connected to respective pipes, not illustrated.

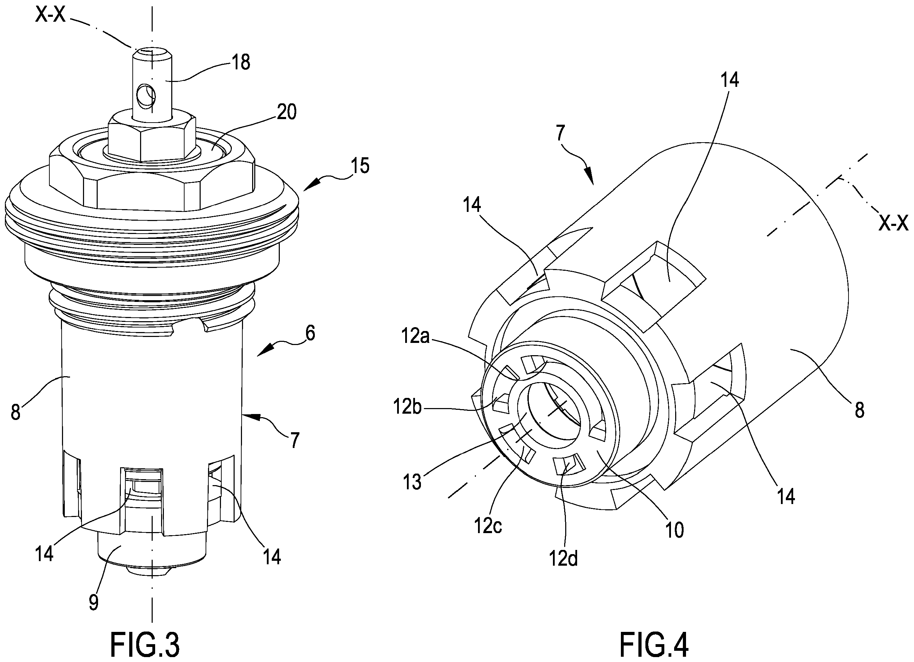

The valve body 2 comprises an outer casing 5 in a single piece which defines the inlet 3 and the outlet 4 and an inner cartridge 6, illustrated globally in figure 3, integrally fastened or fastenable to the outer casing 5.

The outer casing 5 is defined by a main tubular body provided with a main axis "X-X" and by an auxiliary tubular body that develops on a side of the main tubular body and has its own main axis orthogonal to that of the main body. The inlet 3 is defined by one of the ends of the main tubular body and the outlet is defined by a terminal end of the auxiliary tubular body. Therefore, a direction of inflow of fluid defined by the inlet 3 and a direction of outflow of fluid defined by the outlet 4 form between them an angle substantially equal to 90°.

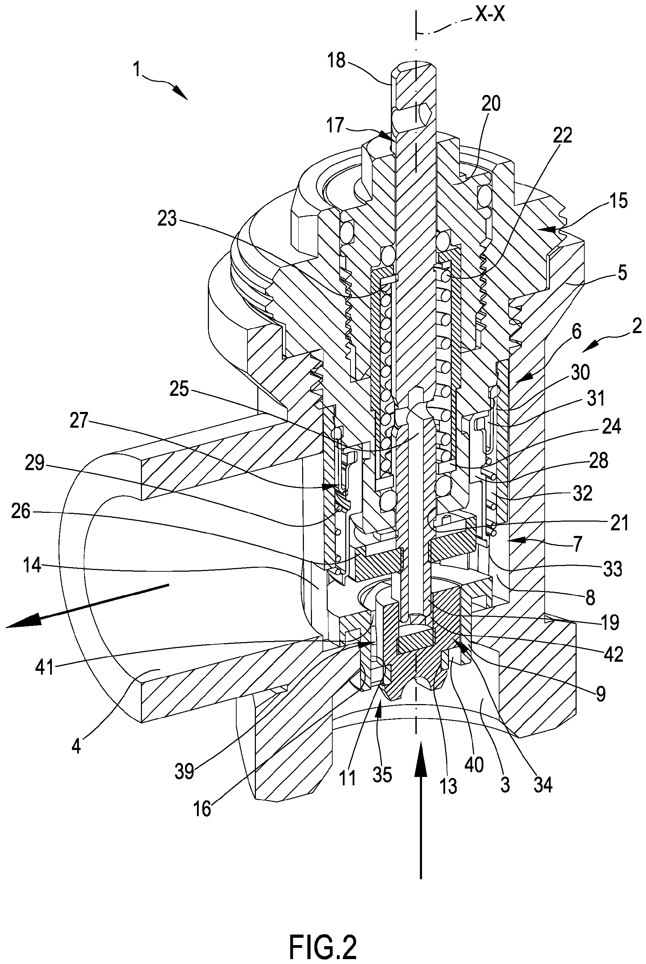

The inner cartridge 6 also has a main axis that, when it is installed in the main tubular body of the outer casing 5, as in figures 1 and 2, coincides with the main axis "X-X" of the main tubular body.

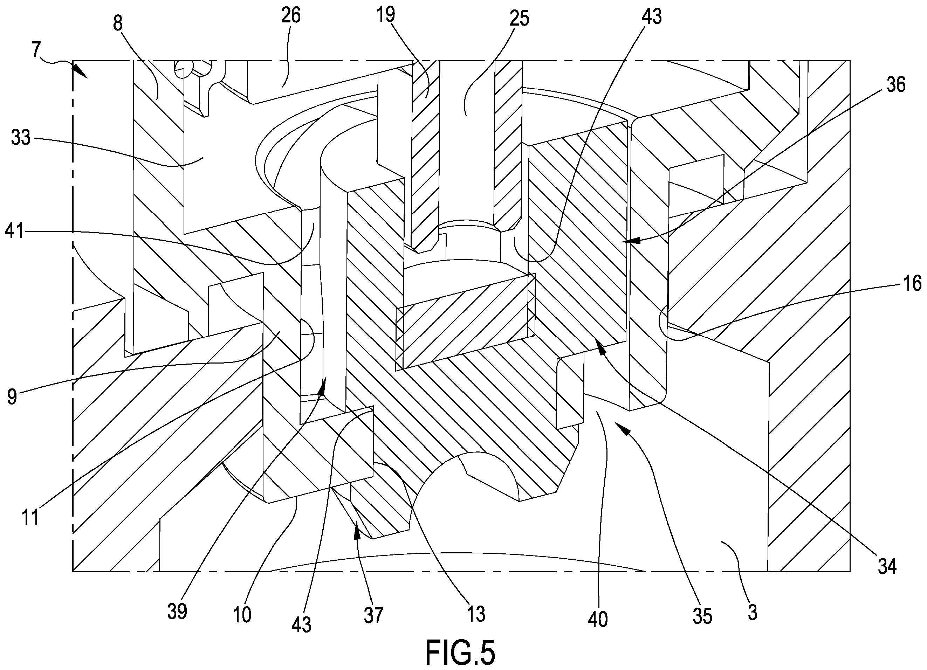

The inner cartridge 6 comprises an inner casing 7 in a single piece defined by a hollow cylinder having a cylindrical portion with greater diameter 8 and a cylindrical portion with smaller diameter 9 (figures 2 - 5). The cylindrical portion with greater diameter 8 is open at one end. The cylindrical portion with smaller diameter 9 is partially closed by a base 10 and it internally delimits a cylindrical seat 11 (figures 4 and 5).

In the base 10 of the cylindrical portion with smaller diameter 9 are obtained windows 12a-12d positioned on a circular path, coaxial to the main axis "X-X" and a hole 13 with circular shape, radially inner with respect to the circular path and to the windows 12a-12d and also coaxial with the main axis "X-X" (figure 4).

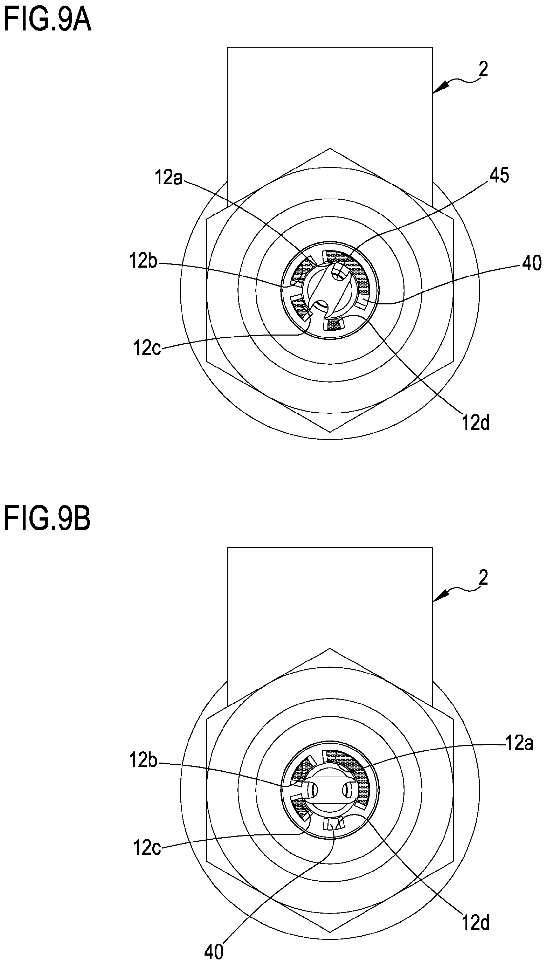

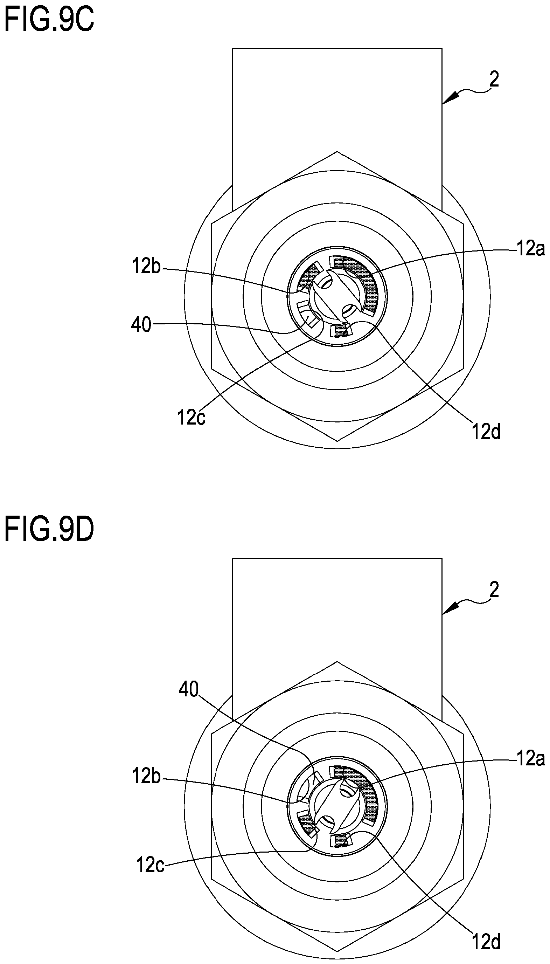

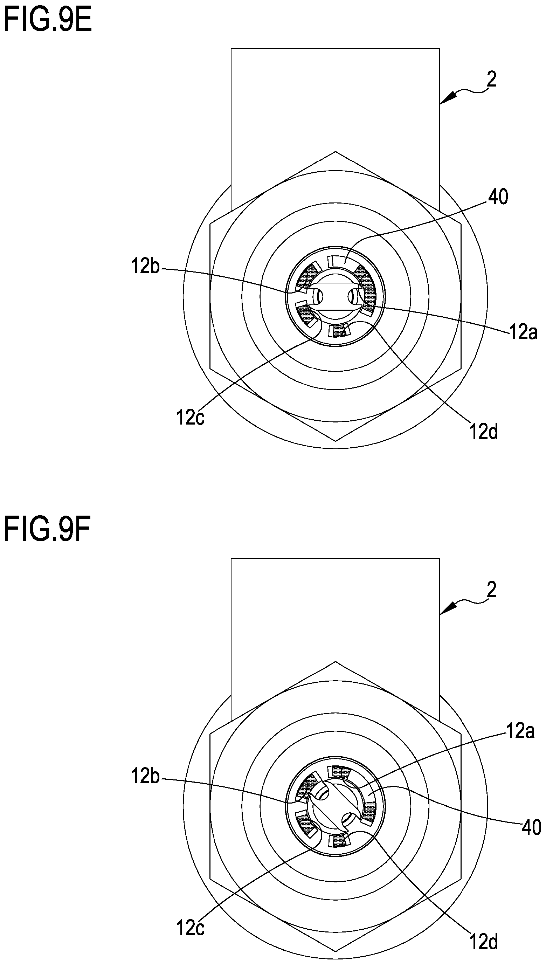

As is better visible in figures 4 and 9A-9F, the windows 12a-12d are shaped as arcs of circles with mutually different angular amplitude. In other words, the windows 12a-12d are elongated slots along the circular path, each delimited by two axis coaxial to the main axis "X-X" and by two edges radial with respect to said main axis "X-X".

With respect to a predefined direction of rotation about the main axis "X-X", the angular amplitude of the windows 12a-12d decreases moving along said circular path. In particular, with reference to the illustrated exemplifying embodiment, framing the base 10 from the exterior of the inner casing 7 and moving counterclockwise, a first window 12a of greater amplitude is followed by a second window 12b of smaller amplitude than the first 12a, a third window 12c of smaller amplitude of the second 12b and a fourth window 12d of smaller amplitude than the third 12c. Vice versa, with respect to said predefined direction of rotation, a distance between successive windows 12a-12d grows along the circular path. An angular distance between the first 12a and the second 12b window is smaller than an angular distance between the second 12b and the third 12c window which in turn is smaller than an angular distance between the third 12c and the fourth 12d window which is in turn is smaller than an angular distance between the fourth 12d and the first 12a window.

In other embodiments, not illustrated, the windows can have different shapes. The window can for example be circular holes with mutually different diameters.

A lateral wall of the cylindrical portion with greater diameter 8 has a plurality of radial openings 14 positioned about the main axis "X-X" (figures 3 and 4). The radial openings 14 have, each, a rectangular or square shape and they are arranged, along the axial development of the cylindrical portion with greater diameter 8, towards the portion with smaller diameter 9. Moreover, in the illustrated exemplifying embodiment, said radial openings 14 are angularly equidistant from each other.

On the open end of the cylindrical portion with greater diameter 8 a connecting body 15 is mounted which is joined sealingly to the inner casing 7 on said open end. The connecting book 15 has an external radially threaded portion configured to be coupled with an internal radially threaded portion positioned in the outer casing 5, in particular at a first end of the main tubular body (figure 2). The connecting body 15 also has an additional threaded portion which remains external to the outer casing 5 and it is configured to couple therewith an actuator, not illustrated.

The cartridge 6 is thus screwable in an optionally removable manner in the outer casing 5. When the cartridge 6 is screwed in the outer casing 5, said outer casing 5, the connecting body 15 and the inner casing 7 are mutually integral and form the valve body 2.

A second end of the main tubular body which defines the inlet 3 has internally a passage 16 within which is housed the cylindrical portion with smaller diameter 9 when the cartridge 6 is screwed in the outer casing 5. In this configuration, the cylindrical portion with smaller diameter 9 projects beyond the aforesaid passage 16 and faces the inlet 3 (figure 2 and 5). The base 10 of the cylindrical portion with smaller diameter 9 is therefore orthogonal to the direction of inflow of the fluid.

A driving spindle 17 is positioned inside the inner cartridge 6 and it is coaxial to the inner casing 7 and to the connecting body 15. The direction of inflow of the fluid defined by the inlet 3 is aligned with the main axis "X-X" of the driving spindle 17 and the direction of outflow is orthogonal to said main axis "X-X".

The driving spindle 17 has a first drive end 18 that projects beyond the connecting body 15 and remains outside the valve body 2 and a second end 19, axially opposite the first, which ends at the cylindrical seat 11. The first drive end 18 is coupled or can be coupled to an actuating set of the actuator, not show, configured to determine, acting on the first drive end 18, the rotation around the main axis "X-X" of the driving spindle 17 and also an axial movement of the driving spindle 17 with respect to the valve body 2. Alternatively, the rotation can be executed manually before mounting the actuator to pre-set a flow rate value.

The actuator is for example of the thermostatic type and it is a part for example of a thermostatic head.

In the illustrated embodiment, the connecting body 15 has, at its own first end, a threaded housing that houses an auxiliary body 20 screwed in the connecting body 15. A second end of the connecting body 15 has a guiding hole 21. The driving spindle 17 is inserted in the auxiliary body 20 and passes through the guiding hole 21. The first drive end 18 of the driving spindle 17 projects from the auxiliary body 20 and the second end 19 of said driving spindle 17 projects beyond the guiding hole 21 (Figures 2 and 5).

The connecting body 15 and the auxiliary body 20 internally delimit a cylindrical housing that surrounds the driving spindle 17 and houses a spring 22. The spring 22 is helical and surrounds the driving spindle 17. A first axial end of the spring 22 rests against a first resting surface integral with the driving spindle 17. Said first resting surface is part of a radial projection defined, for example, by a first ring 23 inserted in an annular seat obtained in the driving spindle 17. A second axial end of the spring 22 rests against a second resting surface integral with the valve body 2, in particular with the connecting body 15. As shown in figure 2, the aforementioned second resting surface is part of a second ring 24 that surrounds the driving spindle 17, is fixed relative to the connecting body 15 and is located in proximity to the guiding hole 21. The spring 22 is then operatively and axially interposed between the driving spindle 17 and the valve body 2 and pushes the driving spindle 17 towards the auxiliary body 20, i.e. it pushes the first drive end 18 of the driving spindle 17 towards the exterior and towards the actuator, not shown. Inside the driving spindle 17 is obtained a conduit 25 that has an axial segment ending on the second end 19 of said driving spindle 17 and radial segments that open laterally in the cylindrical housing that houses the spring 22.

A shutter 26, shaped as a plate or having another appropriate shape, is mounted around the driving spindle 17 to move axially together with said driving spindle 17, is contained inside the inner casing 7 and it is axially positioned between the guiding hole 21 of the connecting body 15 and the cylindrical seat 11. A surface of the plate orthogonal to the main axis "X-X" faces the cylindrical seat 11.

An automatic differential pressure regulating device 27 is housed in the inner casing 7. The automatic regulating device 27 is radially interposed between the inner casing 7 and the second end of the connecting body 15 which is radially distanced from an inner surface of the inner casing 7.

In the illustrated exemplifying embodiment, the automatic differential pressure regulating device comprises a cylindrical body 28 positioned around the second end of the connecting body 15 and around the driving spindle 17 and movable axially with respect to said second end of the connecting body 15, to said driving spindle 17 and to the shutter 26. The cylindrical body 28 has a first portion provided with a radially inner surface positioned substantially in contact with a radially outer surface of the second end of the connecting body 15 so as to be axially guided by said second end. The cylindrical body 28 has a second portion developing axially beyond the second end of the connecting body 15 and also radially distanced from the second end of the connecting body 15. The second portion of the cylindrical body 28 together with the second end of the connecting body 15 defines a substantially cup-like shape with a mouth open towards the cylindrical seat 11. The shutter 26 is radially inner to the second portion of the cylindrical body 28 and it is positioned in proximity to the mouth of the cylindrical body 28.

The automatic regulating device 27 comprises an adjustment spring 29 operatively and axially interposed between the cylindrical body 28 and the valve body 2 to push the cylindrical body 28 away from the cylindrical seat 11. In particular, the regulating spring 29 is a helical spring positioned around the second portion of the cylindrical body 28, i.e. radially interposed between the second portion of the cylindrical body 28 and the inner casing 7. The adjustment spring 29 has a first axial end that rests against a radial projection integral with the cylindrical body 28 and positioned between the first and the second portion of said cylindrical body 28. Said radial projection is for example a ring inserted in a throat obtained in said cylindrical body 28. Alternatively, the first axial end of the adjustment spring 29 has a coil housed in the aforementioned throat of the cylindrical body 28. The adjustment spring 29 has a second axial end, opposite to the first, which rests against a radially inner relief of the inner casing 7.

The automatic regulating device 27 comprises an annular element 30 defined by a rolling membrane radially positioned between the inner casing 7 and the first portion of the cylindrical body 28. The rolling membrane 30 is axially positioned between the connecting body 15 and the radial projection integral with the cylindrical body 28. The rolling membrane 30 is provided with a radially outer edge fastened sealingly to the inner casing 7 and with a radially inner edge fastened sealingly to the first portion of the cylindrical body 28.

The rolling membrane 30, together with the connecting body 15 and with the cylindrical body 28, delimits a first chamber 31 with variable volume. The first chamber 21 is in fluid communication, through passages, not shown, through the connecting body 15, with the cylindrical housing that houses the spring 22 and hence also with the conduit 25 obtained in the driving spindle 17.

The rolling membrane 30 sealingly separates the first chamber 31 from a second chamber 32 delimited between the second portion of the cylindrical body 28 and the inner casing 7 and in which the adjustment spring 29 is housed. The second chamber 32 is in fluid communication through the radial openings 14 with the outlet 4. An annular gap delimited between a terminal edge of the cylindrical body 28 and the inner casing 7 puts in fluid communication the second chamber 32 with an annular volume 33 axially positioned between the shutter 26 and the cylindrical seat 11 and also communicating with the outlet 4 through the radial openings 14. A substantially cylindrical body 34 (figures 2 and 5 - 8) is housed and is movable in rotation in the cylindrical seat 11 around the main axis "X-X" under the action of the driving spindle 17. The cylindrical seat 11 with the windows 12a-12d and the substantially cylindrical body 24 define a flow choking device 35 operatively interposed between the inlet 3 and the outlet 4 of the valve 1.

The substantially cylindrical body 34 comprises a main portion 36 housed in the cylindrical seat 11 and an end portion 37 partially housed and guided in rotation in the hole 13 obtained in the base 10 of the cylindrical seat 11 (figure 2, 5).

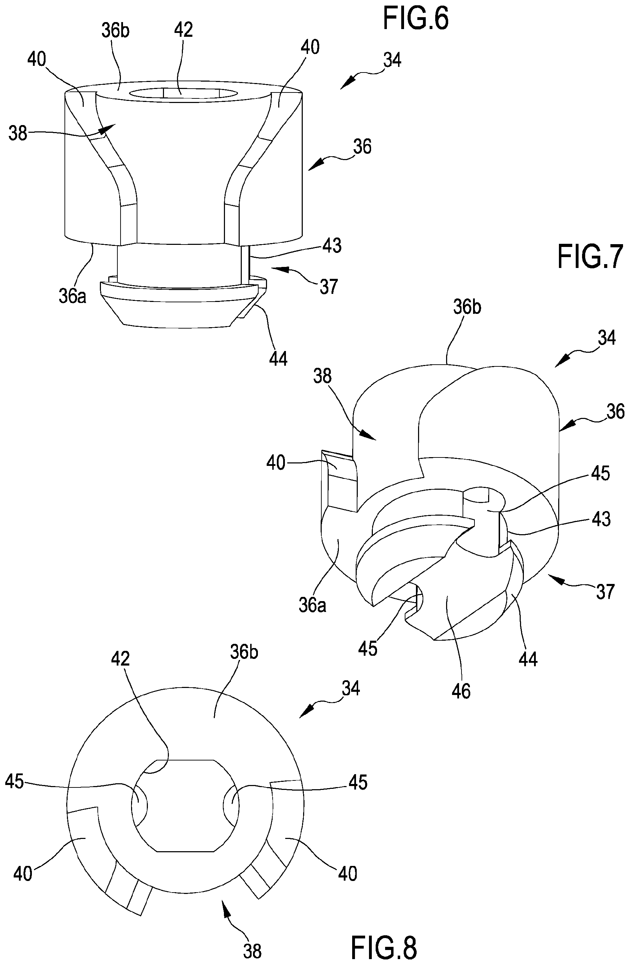

The main portion 36 has a first base 36a, associated with the base 10 which delimits the cylindrical seat 11, and a second base 36b opposite the first (figures 6, 7, 8).

An outer side wall of the main portion 36 has a lateral recess 38 which delimits with an inner lateral wall of the cylindrical seat 11 a passage 39 of the flow choking device 35.

As shown in figures 6, 7 and 8, the lateral recess 38 is delimited between a first portion with greater diameter than the main portion 36 and a second portion with smaller diameter (with respect to the greater diameter) than the same main portion 36. The first portion with greater diameter develops for an arc of circle between 180° and 330°. The second portion with smaller diameter develops for an arc of circle between 30° and 180°.

A radially outer surface of the first portion is connected to a radially outer surface of the second portion by two lateral walls 40 substantially orthogonal to said two surfaces. Said two lateral walls 40 are symmetrical with respect to a generatrix of the substantially cylindrical body 34 and the passage 39 therefore has an axis of symmetry coinciding with said generatrix.

The passage 38 has constant depth, measured radially. The passage 39 comprises a first segment with constant section proximate to the first base 36a in which the lateral walls 40 have a constant mutual distance. Said first segment extends axially from the first base 36a to little less than half of an axial height of the main portion 36. The passage 39 has a second segment with growing section towards the second base 36b in which the lateral walls 40 diverge from each other towards the second base 36b. Said second segment extends axially from little more than half of the axial height of the main portion 36 to the second base 36b. Each lateral wall 40 has an arched junction between the first segment and the second segment, i.e. positioned at approximately half of the axial height of the main portion 36.

The passage 39 of the flow choking device 35 opens on the first base 36a of the substantially cylindrical body 34 and towards the base 10 of the cylindrical seat 11. The windows 12a-12d can be selectively aligned with the passage 39 through the rotation of the substantially cylindrical body 34 to define an inlet opening 40 of the flow choking device 35 (figures 2, 5 and 9A - 9F). The rotation of the substantially cylindrical body 34 is obtained through the rotation of the driving spindle 17 actuated manually acting on the first drive end 18 or automatically through the actuator that acts on said first drive end 18.

In this regard, an inlet in said passage 39 has an angular amplitude greater than a maximum distance between successive windows, i.e., in the illustrated embodiment, than the angular distance between the fourth 12d and the first 12a window. In this way, the inlet opening 40 of the flow choking device 35 always has a passage port. The inlet in said passage 39 also has a smaller angular amplitude than an angular amplitude of the largest window, i.e. of the first window 12a. Moreover, as shown in figures 9A - 9F, the vale has six positions (six flow rate presets) corresponding to growing amplitudes of the inlet opening 40. In the position of figure 9F, the amplitude of the inlet opening 40 corresponds to the entire amplitude of the inlet in the passage 39.

The passage 39 of the flow choking device 35 opens on the second base 36b of the substantially cylindrical body 34 and towards the shutter 26 and the mouth of the cylindrical body 28 and defines and outlet opening 41 of the flow choking device 35 (figures 2 and 5). The outlet opening 41 opens in the annular volume 33 (figures 2 and 5) that surrounds the driving spindle 17 and it is delimited by the shutter 26, by the second base 36b and by the inner casing 7. The radial openings 14 thus put in fluid communication the outlet opening 41 of the flow choking device 35 with the outlet 4 of the valve body 2.

The second end 19 of the driving spindle 17 is partially inserted in a cavity 42 obtained on the second base 36b of the substantially cylindrical body 34 (figures 2, 5 and 8). Said cavity 42 is non-circular and it is counter-shaped to the second end 19 of the driving spindle 17, so that the substantially cylindrical body 34 is movable in rotation together with the driving spindle 17. The second end 19 of the driving spindle 17 is movable axially, i.e. it can slide, in the aforementioned cavity 42 with respect to the substantially cylindrical body 34 that is axially fixed with respect to the cylindrical seat 11 and to the valve body 2. For this purpose, the end portion 37 of the substantially cylindrical body 34 has a throat 43 delimited between the main portion and a cap 44 of the end portion 37. The throat 43 is engaged by a radially inner edge of the hole 13, to prevent the axial movement of the substantially cylindrical body 34.

The spring 22 pushes the driving spindle 17 and the shutter 26 away from the flow choking device 35. The adjustment spring 29 pushes the cylindrical body 28 of the automatic regulating device 27 away from the flow choking device 35.

To put in communication the conduit 25 obtained in the driving spindle 17, and hence the first chamber 31 of the automatic regulating device 27, with the inlet 3, on a lateral wall of the end portion 37 of the substantially cylindrical body 34 are obtained two channels 45 positioned around the main axis "X-X" in diametrically opposite position. Said channels 45 develop parallel to the main axis "X-X", they open on the end portion 37 and they are also in fluid communication with the cavity 42. In the illustrated embodiment, the two channels 45 are partially delimited by the lateral wall of the throat 43 and by a radially inner edge of the hole 13 housing the end portion 37. Moreover, an indent 46 is obtained on the end portion 37 in which said indent 46 connects mouths of the two channels 45 open on said end portion 37.

In use, the actuator, as a function of ambient temperature, acts automatically on the first drive end 18 of the driving spindle 17, i.e. pushes it, to determine an axial displacement. Said displacement causes the shutter 28 to move closer to or farther away from the cylindrical seat 11. In the absence of push of the thermostatic actuator, the driving spindle 17 is brought to an "open" position by the spring 22. In the opposite direction the travel of the driving spindle 17 is limited by the shutter 26 resting on an edge of the cylindrical seat 11 ("closed" position).

A knob can for example be applied on the first drive end 18 to manually regulate the angular position of the driving spindle 17 before mounting the actuator. The rotation of the driving spindle 17 drives in rotation the substantially cylindrical body 34 of the flow choking device 35 and allows to set the desired position between those illustrated in figures 9A - 9F, i.e. to pre-set a reference flow rate.

The automatic regulating device 27 assures that the flow rate is maintained through the pressure fluctuations of the system.

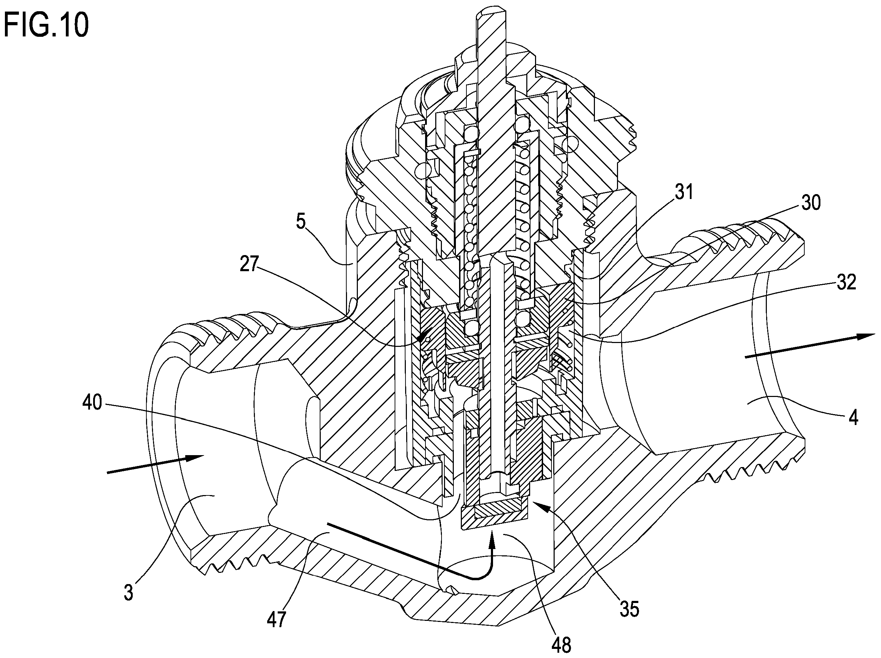

Figures 10 - 15 illustrate a different embodiment of the control valve 1. The main differences of this different embodiment with respect to the control valve described above in detail are described below.

As is evident from figure 10, the outer casing 5 is shaped in such a way that the inlet 3 and the outlet 4 are mutually aligned and the inflow direction and the outflow direction mutually form an angle substantially equal to 180°. The outer casing 5 also has an inner conduit 47 that connects the inlet 3 with a connecting chamber 48 facing the inlet opening 40 of the flow choking device 35.

The structure of the automatic regulating device 27 is differentiated from the one described above because it does not comprise a rolling membrane but the division between the first chamber 31 and the second chamber 32 is operated by a rigid annular element 30, radially outer and integrated in the cylindrical body 28 that brushes an inner wall of the valve body 2 (figure 10). A radial clearance between the annular element 30 and the valve body 2 is such whereby pressure leaks between the first chamber 31 and the second chamber 32 are substantially avoided.

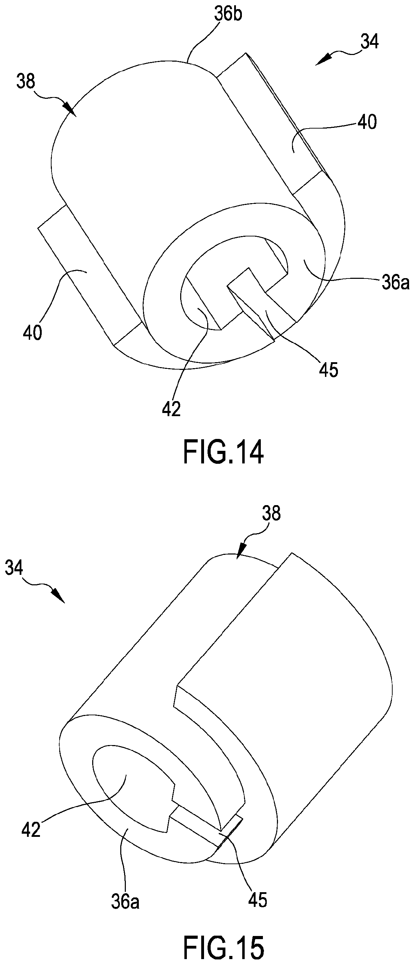

The lateral recess 38 of the substantially cylindrical body 34 of the flow choking device 35 is delimited by two walls 40, parallel to each other and parallel to the main axis "X-X", so that the section of the passage 39 is constant (figures 14 and 15). The passage 39 develops for an arc of circle of approximately 180°.

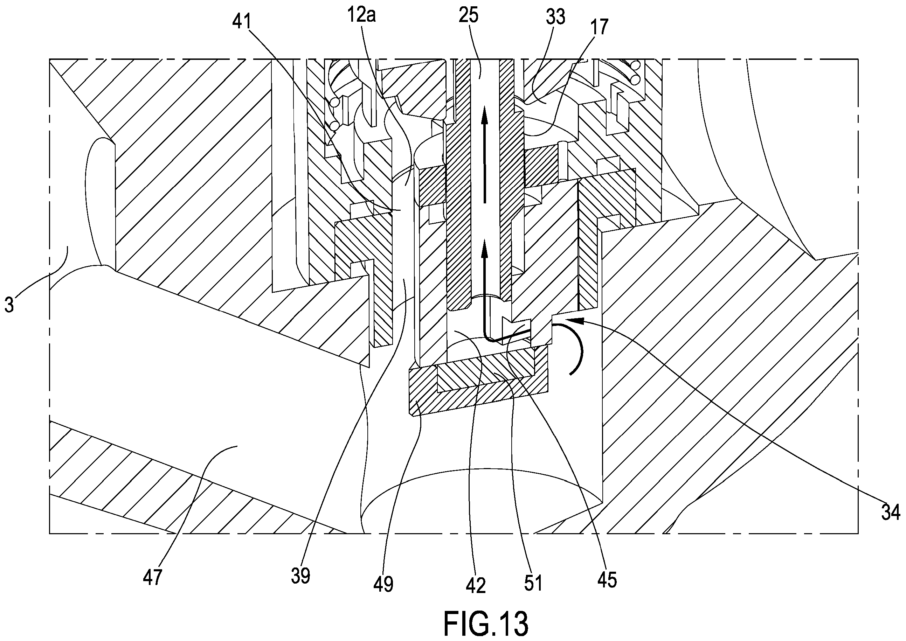

To put in communication the conduit 25 obtained in the driving spindle 17, and hence the first chamber 31 of the automatic regulating device 27, with the inlet 3, through a lateral wall of the substantially cylindrical body 34 is obtained a single radial channel 45 (figures 13, 14 and 15).

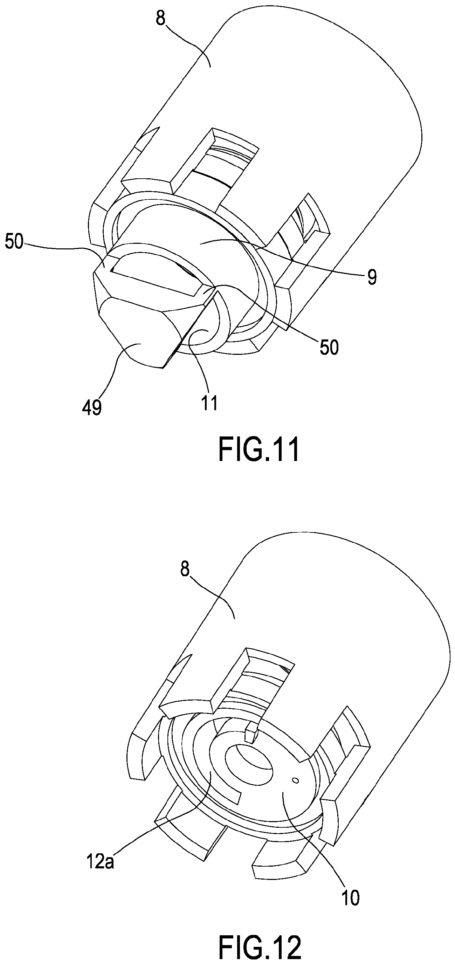

The cylindrical portion with greater diameter 8 and the one with smaller diameter 9 of the inner casing 7 are two distinct and associated bodies (figures 11 and 12).

The base 10 of the cylindrical seat 11 is part of the cylindrical portion and greater diameter 8 (figure 12). The base 10 of the cylindrical seat 11, instead of being associated to the first base 36a of the substantially cylindrical body 34, is placed next to the second base 36b of said substantially cylindrical body 34 so that it remains interposed between the substantially cylindrical body 34 and the automatic differential pressure regulating device 27. In other words, the base 10 directly faces the annular volume 33 and separates said annular volume 33 from the substantially cylindrical body 34. Therefore, the only arched window 12a obtained in the base 10 is located at the outlet opening 41 of the flow choking device 35.

To hold the substantially cylindrical body 34 in the cylindrical seat 11, the inner casing 7 comprises a support 49 connected to the cylindrical portion with smaller diameter 9 by means of arms 50 mutually distanced to allow the fluid to transit towards the passage 39 (figure 11).

In the support 49 (figure 13) is drilled a circular hole that houses a gasket 51 with a disc shape which closes inferiorly the cavity 42 of the substantially cylindrical body 34 (figure 13).

**List of elements**

| | |
|---|---|
| 1 | Control valve |
| 2 | valve body |
| X-X | main axis |
| 3 | inlet |
| 4 | outlet |
| 5 | outer casing |
| 6 | inner cartridge |
| 7 | inner casing |
| 8 | cylindrical portion with greater diameter |
| 9 | cylindrical portion with smaller diameter |
| 10 | base of the cylindrical seat |
| 11 | cylindrical seat |
| 12a-12d | windows |
| 13 | hole |
| 14 | radial openings |
| 15 | connecting body |
| 16 | passage |
| 17 | driving spindle |
| 18 | first drive end |
| 19 | second end |
| 20 | auxiliary body |
| 21 | guiding hole |
| 22 | spring |
| 23 | first ring |
| 24 | second ring |
| 25 | conduit |
| 26 | shutter |
| 27 | automatic regulating device |
| 28 | cylindrical body |
| 29 | adjustment spring |
| 30 | annular element |
| 31 | first chamber |
| 32 | second chamber |
| 33 | annular volume |
| 34 | substantially cylindrical body |
| 35 | flow choking device |
| 36 | main portion |
| 36a | first base |
| 36b | second base |
| 37 | end portion |
| 38 | lateral recess |
| 39 | passage |
| 40 | inlet opening |
| 41 | outlet opening |
| 42 | cavity |
| 43 | throat |
| 44 | cap |
| 45 | channels |
| 46 | indent |
| 47 | inner conduit |
| 48 | connecting chamber |
| 49 | support |
| 50 | arms |
| 51 | gasket |

## Claims

1. Control valve, comprising:
a valve body (2) having an inlet (3) and an outlet (4);
a flow choking device (35) operatively interposed between the inlet (3) and the outlet (4);
a driving spindle (17) extending along a main axis (X-X) and having a first drive end (18) and a second end (19) opposite the first (18) and connected to the flow choking device (35);
an automatic differential pressure regulating device (27) placed about the driving spindle (17) and comprising:
a cylindrical body (28) arranged around the driving spindle (17) and movable axially with respect to said driving spindle (17);
an adjustment spring (29) operatively interposed between the valve body (2) and the cylindrical body (28) for urging said cylindrical body (28) away from the flow choking device (35);
an annular element (30) bound at least to the cylindrical body (28) so as to delimit a first chamber (31) in fluid communication with the inlet (3) and a second chamber (32) in fluid communication with the outlet (4);
wherein the flow choking device (35) comprises a substantially cylindrical body (34) ;
**characterised in that** said flow choking device (35) has at least one inlet opening (40) located at a first base (36a) of said substantially cylindrical body (34) and at least one outlet opening (41) disposed at a second base (36b) of the substantially cylindrical body (34) and facing towards a mouth of the cylindrical body (28).

2. A valve according to claim 1, wherein the flow choking device (35) has a cylindrical seat (11) formed in the valve body (2); wherein the substantially cylindrical body (34) is housed and is movable in rotation in said cylindrical seat (11) by action of the driving spindle (17) and around the main axis (X-X); wherein a passage (39) between the inlet opening (40) and the outlet opening (41) of the flow choking device (35) is radially delimited between an inner side wall of the cylindrical seat (11) and an outer side wall of the substantially cylindrical body (34).

3. A valve according to claim 2, wherein the outer side wall of the substantially cylindrical body (34) has a lateral recess (38) delimiting said passage (39) of the flow choking device (35) with the inner side wall of the cylindrical seat (11).

4. A valve according to claim 2 or 3, wherein the passage (39) has a constant cross-section or diverges from the inlet opening (40) towards the outlet opening (41).

5. A valve according to claim 2 or 3 or 4, wherein a base (10) of the cylindrical seat (11) has at least one window (12a, 12b, 12c, 12d) at least partially alignable with said passage (39) by rotation of the substantially cylindrical body (34) to define the inlet opening (40) or the outlet opening (41) of the flow choking device (35).

6. A valve according to claim 5, wherein the base (10) has a plurality of windows (12a, 12b, 12c, 12d) arranged on a circular path about the main axis (X-X).

7. A valve according to claim 6, wherein the windows (12a, 12b, 12c, 12d) of said plurality have arcuate shapes with different angular widths.

8. A valve according to claim 5, 6 or 7, wherein the first base (36a) of the substantially cylindrical body (34) is placed next to the base (10) of the cylindrical seat (11) or the second base (36b) of the substantially cylindrical body (34) is placed next to the base (10) of the cylindrical seat (11).

9. A valve according to any one of claims 1 to 8, wherein the substantially cylindrical body (34) has a cavity (42) partially engaged by the second end (19) of the driving spindle (17); wherein the second end (19) of the driving spindle (17) is movable axially in said cavity (42) with respect to the substantially cylindrical body (34); wherein the second end (19) of the driving spindle (17) is movable in rotation together with the substantially cylindrical body (34).

10. A valve according to any one of claims 1 to 9, wherein the substantially cylindrical body (34) is axially fixed with respect to the valve body (2).

11. A valve according to claim 9, wherein at least one channel (45) in fluid communication with the inlet (3) of the valve body (2) and with the cavity (42) is fashioned in the substantially cylindrical body (34); wherein the drive spindle (17) has a duct (25) configured to put said cavity (42) in fluid communication with the first chamber (31).

12. A valve according to claim 11, wherein said at least one channel (45) is formed on a side wall of the substantially cylindrical body (34).

13. A valve according to claim 12, wherein said at least one channel (45) develops parallel to the main axis (X-X) or along a radial direction.

14. A valve according to any one of claims 1 to 13, comprising a shutter (26) mounted around the drive spindle (17) and facing towards the outlet opening (41) of the flow choking device (35).

15. A valve according to any one of claims 1 to 14, wherein the annular element (30) is a rolling diaphragm having a radially inner edge bound to the cylindrical body (28) and a radially outer edge bound to the valve body (2); or wherein the annular element (30) protrudes radially from the cylindrical body (28) and slides with respect to the valve body (2) and wherein a radial clearance between the annular element (30) and the valve body (2) is such whereby pressure leaks between the first chamber (31) and the second chamber (32) are substantially avoided.

## Patentansprüche

1. Steuerventil, umfassend:
einen Ventilkörper (2), welcher einen Einlass (3) und einen Auslass (4) aufweist:
eine Strömung-Hemmvorrichtung (35), welche zwischen dem Einlass (3) und dem Auslass (4) betriebsmäßig eingefügt ist;
eine Antriebsspindel (17), welche sich entlang einer Hauptachse (X-X) erstreckt und ein erstes Antriebsende (18) und ein zweites Ende (19) aufweist, welches dem ersten (18) entgegengesetzt ist und mit der Strömung-Hemmvorrichtung (35) verbunden ist,
eine automatische Differenzdruck-Regulierungsvorrichtung (27), welche um die Antriebsspindel (17) herum platziert ist und umfasst:
einen zylindrischen Körper (28), welcher um die Antriebsspindel (17) herum angeordnet ist und in Bezug auf die Antriebsspindel (17) axial bewegbar ist; eine Einstellfeder (29), welche zwischen dem Ventilkörper (2) und dem zylindrischen Körper (28) betriebsmäßig eingefügt ist, um den zylindrischen Körper (28) von der Strömung-Hemmvorrichtung (35) weg zu drängen;
ein ringförmiges Element (30), welches wenigstens mit dem zylindrischen Körper (28) verbunden ist, um eine erste Kammer (31) in Fluidverbindung mit dem Einlass (3) und eine zweite Kammer (32) in Fluidverbindung mit dem Auslass (4) zu begrenzen;
wobei die Strömung-Hemmvorrichtung (35) einen im Wesentlichen zylindrischen Körper (34) umfasst,
**dadurch gekennzeichnet, dass** die Strömung-Hemmvorrichtung (35) wenigstens eine Einlassöffnung (40), welche an einer ersten Basis (36a) des im Wesentlichen zylindrischen Körpers (34) angeordnet ist, und wenigstens eine Auslassöffnung (41) aufweist, welche an einer zweiten Basis (36b) des im Wesentlichen zylindrischen Körpers (34) angeordnet ist und in Richtung einer Mündung des zylindrischen Körpers (28) weist.

2. Ventil nach Anspruch 1, wobei die Strömung-Hemmvorrichtung (35) einen zylindrischen Sitz (11) aufweist, welcher in dem Ventilkörper (2) gebildet ist; wobei der im Wesentlichen zylindrische Körper (34) in dem zylindrischen Sitz (11) aufgenommen und in diesem durch eine Wirkung der Antriebsspindel (17) und um die Hauptachse (X-X) drehbeweglich ist; wobei ein Durchgang (39) zwischen der Einlassöffnung (40) und der Auslassöffnung (41) der Strömung-Hemmvorrichtung (35) zwischen einer inneren Seitenwand des zylindrischen Sitzes (11) und einer äußeren Seitenwand des im Wesentlichen zylindrischen Körpers (34) radial begrenzt ist.

3. Ventil nach Anspruch 2, wobei die äußere Seitenwand des im Wesentlichen zylindrischen Körpers (34) eine laterale Aussparung (38) aufweist, welche den Durchgang (39) der Strömung-Hemmvorrichtung (35) mit der inneren Seitenwand des zylindrischen Sitzes (11) begrenzt.

4. Ventil nach Anspruch 2 oder 3, wobei der Durchgang (39) einen konstanten Querschnitt aufweist oder von der Einlassöffnung (40) in Richtung der Auslassöffnung (41) divergiert.

5. Ventil nach Anspruch 2 oder 3 oder 4, wobei eine Basis (10) des zylindrischen Sitzes (11) wenigstens ein Fenster (12a, 12b, 12c, 12d) aufweist, welches durch eine Drehung des im Wesentlichen zylindrischen Körpers (34) mit dem Durchgang (39) wenigstens teilweise ausrichtbar ist, um die Einlassöffnung (40) oder die Auslassöffnung (41) der Strömung-Hemmvorrichtung (35) zu definieren.

6. Ventil nach Anspruch 5, wobei die Basis (10) eine Mehrzahl von Fenstern (12a, 12b, 12c, 12d) aufweist, welche auf einem kreisförmigen Pfad um die Hauptachse (X-X) herum angeordnet sind.

7. Ventil nach Anspruch 6, wobei die Fenster (12a, 12b, 12c, 12d) der Mehrzahl Bogenformen mit verschiedenen Winkelweiten aufweisen.

8. Ventil nach Anspruch 5, 6 oder 7, wobei die erste Basis (36a) des im Wesentlichen zylindrischen Körpers (34) in der Nähe der Basis (10) des zylindrischen Sitzes (11) platziert ist oder die zweite Basis (36b) des im Wesentlichen zylindrischen Körpers (34) in der Nähe der Basis (10) des zylindrischen Sitzes (11) platziert ist.

9. Ventil nach einem der Ansprüche 1 bis 8, wobei der im Wesentlichen zylindrische Körper (34) einen Hohlraum (42) aufweist, welcher durch das zweite Ende (19) der Antriebsspindel (17) teilweise in Eingriff genommen ist, wobei das zweite Ende (19) der Antriebsspindel (17) in dem Hohlraum (42) in Bezug auf den im Wesentlichen zylindrischen Körper (34) axial bewegbar ist; wobei das zweite Ende (19) der Antriebsspindel (17) zusammen mit dem im Wesentlichen zylindrischen Körper (34) drehbeweglich ist.

10. Ventil nach einem der Ansprüche 1 bis 9, wobei der im Wesentlichen zylindrische Körper (34) in Bezug auf den Ventilkörper (2) axial fixiert ist.

11. Ventil nach Anspruch 9, wobei wenigstens ein Kanal (45), welcher mit dem Einlass (3) des Ventilkörpers (2) und mit dem Hohlraum (42) in Fluidverbindung steht, in dem im Wesentlichen zylindrischen Körper (34) ausgebildet ist; wobei die Antriebsspindel (17) einen Kanal (25) aufweist, welcher dazu eingerichtet ist, den Hohlraum (42) mit der ersten Kammer (31) in Fluidverbindung zu versetzen.

12. Ventil nach Anspruch 11, wobei der wenigstens eine Kanal (45) an einer Seitenwand des im Wesentlichen zylindrischen Körpers (34) gebildet ist.

13. Ventil nach Anspruch 12, wobei sich der wenigstens eine Kanal (45) parallel zu der Hauptachse (X-X) oder entlang einer radialen Richtung entwickelt.

14. Ventil nach einem der Ansprüche 1 bis 13, umfassend einen Verschluss (26), welcher um die Antriebsspindel (17) herum montiert ist und in Richtung der Auslassöffnung (41) der Strömung-Hemmvorrichtung (35) weist.

15. Ventil nach einem der Ansprüche 1 bis 14, wobei das ringförmige Element (30) eine Rollmembran ist, welche einen radial inneren Rand, welcher mit dem zylindrischen Körper (28) verbunden ist, und einen radial äußeren Rand aufweist, welcher mit dem Ventilkörper (2) verbunden ist; oder wobei das ringförmige Element (30) von dem zylindrischen Körper (28) her radial vorsteht und in Bezug auf den Ventilkörper (2) gleitet und wobei ein radialer Freiraum zwischen dem ringförmigen Element (30) und dem Ventilkörper (2) derart ist, dass Druck-Leckagen zwischen der ersten Kammer (31) und der zweiten Kammer (32) im Wesentlichen verhindert werden.

## Revendications

1. Vanne de régulation, comprenant :
un corps de vanne (2) ayant un orifice d'entrée (3) et un orifice de sortie (4) ;
un dispositif d'étranglement de flux (35) fonctionnellement interposé entre l'orifice d'entrée (3) et l'orifice de sortie (4) ;
une broche d'entraînement (17) s'étendant le long d'un axe principal (X-X) et ayant une première extrémité (18) d'entraînement et une seconde extrémité (19) opposée à la première (18) et reliée au dispositif d'étranglement de flux (35) ;
un dispositif de régulation automatique de la pression différentielle (27) placé autour de la broche d'entraînement (17) et comprenant :
un corps cylindrique (28) disposé autour de la broche d'entraînement (17) et axialement mobile par rapport à ladite broche d'entraînement (17) ;
un ressort d'ajustement (29) fonctionnellement interposé entre le corps de vanne (2) et le corps cylindrique (28) pour pousser ledit corps cylindrique (28) loin du dispositif d'étranglement de flux (35) ;
un élément annulaire (30) lié au moins au corps cylindrique (28) afin de délimiter une première chambre (31) en communication fluidique avec l'orifice d'entrée (3) et une seconde chambre (32) en communication fluidique avec l'orifice de sortie (4) ;
le dispositif d'étranglement de flux (35) comprenant un corps sensiblement cylindrique (34) ;
**caractérisé en ce que** ledit dispositif d'étranglement de flux (35) présente au moins une ouverture d'entrée (40) localisée au niveau d'une première base (36a) dudit corps sensiblement cylindrique (34) et au moins une ouverture de sortie (41) disposée au niveau d'une seconde base (36b) du corps sensiblement cylindrique (34) et faisant face vers une bouche du corps cylindrique (28).

2. Vanne selon la revendication 1, le dispositif d'étranglement de flux (35) ayant une assise cylindrique (11) formée dans le corps de vanne (2) ; le corps sensiblement cylindrique (34) étant logé et étant mobile en rotation dans ladite assise cylindrique (11) par l'action de la broche d'entraînement (17) et autour de l'axe principal (X-X) ; un passage (39) entre l'ouverture d'entrée (40) et l'ouverture de sortie (41) du dispositif d'étranglement de flux (35) étant radialement délimité entre une paroi latérale interne de l'assise cylindrique (11) et une paroi latérale externe du corps sensiblement cylindrique (34).

3. Vanne selon la revendication 2, la paroi latérale externe du corps sensiblement cylindrique (34) ayant un renfoncement latéral (38) délimitant ledit passage (39) du dispositif d'étranglement de flux (35) avec la paroi latérale interne de l'assise cylindrique (11).

4. Vanne selon la revendication 2 ou 3, le passage (39) ayant une section transversale constante ou divergeant de l'ouverture d'entrée (40) vers l'ouverture de sortie (41).

5. Vanne selon la revendication 2 ou 3 ou 4, une base (10) de l'assise cylindrique (11) ayant au moins une fenêtre (12a, 12b, 12c, 12d) au moins partiellement alignable avec ledit passage (39) en rotation du corps sensiblement cylindrique (34) pour définir l'ouverture d'entrée (40) ou l'ouverture de sortie (41) du dispositif d'étranglement de flux (35).

6. Vanne selon la revendication 5, la base (10) ayant une pluralité de fenêtres (12a, 12b, 12c, 12d) disposées sur un trajet circulaire autour de l'axe principal (X-X).

7. Vanne selon la revendication 6, les fenêtres (12a, 12b, 12c, 12d) de ladite pluralité ayant des formes arquées avec différentes largeurs angulaires.

8. Vanne selon la revendication 5, 6 ou 7, la première base (36a) du corps sensiblement cylindrique (34) étant placée près de la base (10) de l'assise cylindrique (11) ou la seconde base (36b) du corps sensiblement cylindrique (34) étant placée près de la base (10) de l'assise cylindrique (11).

9. Vanne selon l'une quelconque des revendications 1 à 8, le corps sensiblement cylindrique (34) ayant une cavité (42) partiellement engagée par la seconde extrémité (19) de la broche d'entraînement (17) ; la seconde extrémité (19) de la broche d'entraînement (17) étant axialement mobile dans ladite cavité (42) par rapport au corps sensiblement cylindrique (34) ; la seconde extrémité (19) de la broche d'entraînement (17) étant mobile en rotation conjointement avec le corps sensiblement cylindrique (34).

10. Vanne selon l'une quelconque des revendications 1 à 9, le corps sensiblement cylindrique (34) étant axialement fixé par rapport au corps de vanne (2).

11. Vanne selon la revendication 9, au moins un canal (45) en communication fluidique avec l'orifice d'entrée (3) du corps de vanne (2) et avec la cavité (42) étant façonné dans le corps sensiblement cylindrique (34) ; la broche d'entraînement (17) ayant un conduit (25) conçu pour placer ladite cavité (42) en communication fluidique avec la première chambre (31).

12. Vanne selon la revendication 11, ledit au moins un canal (45) étant formé sur une paroi latérale du corps sensiblement cylindrique (34).

13. Vanne selon la revendication 12, ledit au moins un canal (45) se développant parallèle à l'axe principal (X-X) ou le long d'un sens radial.

14. Vanne selon l'une quelconque des revendications 1 à 13, comprenant un obturateur (26) monté autour de la broche d'entraînement (17) et faisant face vers l'ouverture de sortie (41) du dispositif d'étranglement de flux (35).

15. Vanne selon l'une quelconque des revendications 1 à 14, l'élément annulaire (30) étant un diaphragme de roulement ayant un bord radialement interne lié au corps cylindrique (28) et un bord radialement externe lié au corps de vanne (2) ; ou l'élément annulaire (30) faisant saillie radialement depuis le corps cylindrique (28) et coulissant par rapport au corps de vanne (2) et une clairance radiale entre l'élément annulaire (30) et le corps de vanne (2) étant telle que des fuites de pression entre la première chambre (31) et la seconde chambre (32) sont sensiblement évitées.
